# EUROPEAN PATENT SPECIFICATION

(11) **EP 3 816 521 B1**
(45) Date of publication and mention of the grant of the patent: **18.10.2023**
(21) Application number: 20204477.2
(22) Date of filing: 28.10.2020
(51) Int. Cl.: F24D 3/10, F24D 3/18, F24D 17/02, F24H 9/14

(54) **HYDRAULIC ASSEMBLY FOR A HEAT PUMP FOR ROOM HEATING AND FOR THE PRODUCTION OF DOMESTIC HOT WATER AND HEAT PUMP PROVIDED WITH SAID ASSEMBLY**
HYDRAULISCHE BAUGRUPPE FÜR EINE WÄRMEPUMPE ZUR RAUMHEIZUNG UND ZUR ERZEUGUNG VON HEISSEM BRAUCHWASSER UND WÄRMEPUMPE MIT DIESER BAUGRUPPE
ENSEMBLE HYDRAULIQUE POUR UNE POMPE À CHALEUR POUR LE CHAUFFAGE DES PIÈCES ET POUR LA PRODUCTION D'EAU CHAUDE DOMESTIQUE ET DE POMPE À CHALEUR FOURNI AVEC DIT ENSEMBLE

(30) Priority: 28.10.2019 IT 201900019874
(43) Date of publication of application: 05.05.2021
(73) Proprietor: O.T.M.A. S.N.C. di Spaggiari & C., 42041 Brescello (IT)
(72) Inventor: SPAGGIARI, Remo, 42041 BRESCELLO (RE) (IT); BACCHINI, Mirko, 42041 BRESCELLO (RE) (IT); RASTELLI, Raffaello, 42041 BRESCELLO (RE) (IT)
(74) Representative: Studio Torta S.p.A.

(56) References cited:
- EP-A1- 2 942 583
- EP-A1- 3 163 208
- EP-A1- 3 370 011
- GB-A- 1 433 355
- US-A- 4 924 069

## Description

### CROSS-REFERENCE TO RELATED APPLICATIONS

This patent application claims priority from Italian patent application no. 102019000019874 filed on 28/10/2019.

### TECHNICAL FIELD

The present invention relates to a hydraulic assembly for a heat pump designed for room heating and for the production of domestic hot water and to a heat pump provided with such assembly.

### PRIOR ART

Typically, a heat pump system for room heating and for the production of domestic hot water comprises a heat pump and a hydraulic network connected to one another. The hydraulic network comprises, in turn, in a known manner, a high-temperature (55-60°C) heating circuit, in which the hot water flows to feed the radiators and, possibly, a low-temperature (30-35°C) heating circuit, in which the mixed water flows to feed the radiant floor panels. The high-temperature and low-temperature circuits comprise respective hot water delivery ducts towards at least one respective heating element and respective cold water return ducts from the heating elements towards the heat pump.

Likewise, the domestic hot water heating circuit also comprises in turn a hot water delivery duct towards at least one heating element (heat exchanger) located inside the storage tank and a water return duct from the heating element towards the heat pump.

Furthermore, the system comprises: a primary heat exchanger advantageously, but not necessarily, of the plate type, to which a refrigerant gas supply circuit is associated, comprising a refrigerant gas delivery duct towards a condenser and a refrigerant gas return duct from the condenser towards the primary heat exchanger; an auxiliary heater in hydraulic connection by means of ducts with the primary heat exchanger; a pumping assembly hydraulically connected by means of ducts to the auxiliary heater; a filtering element, preferably of the magnetic type, for the magnetic capture of the impurities of ferrous origin released into the water in hydraulic connection by means of ducts with the primary heat exchanger.

The auxiliary heater is provided with electric resistance for heating the water and an automatic air relief valve.

The heat pump further comprises a flow meter which detects the flow of circulating water, a pressure switch for controlling the pressure of the hydraulic circuit, a safety valve against overpressure, a three-way diverter valve designed to activate the domestic step or the heating step, diverting the water flow coming from the pumping assembly and three probes for controlling the temperature of the water entering/leaving the primary heat exchanger and the auxiliary heater.

US4924069 relates to a hydraulic assembly for a heat pump system for room heating and for the production of domestic hot water of the above described type.

As evident, the system described thus far comprises a plurality of single-function components connected to one another by means of numerous pipes which define layouts with considerable dimensions, wherein it is particularly difficult to access some of said single-function components to carry out maintenance operations. For this reason, the need is increasingly felt to contain the dimensions of heat pump systems and, at the same time, to improve and simplify the ordinary and extraordinary maintenance through an accurate design of new multifunctional hydraulic assemblies aimed at obtaining a substantial reduction of the components, of the dimensions and of the costs of the product.

### DESCRIPTION OF THE INVENTION

The object of the present invention is therefore to provide a multifunctional hydraulic assembly for a heat pump for room heating and for the production of domestic hot water which is free from the drawbacks of the prior art and is, in particular, easy and cost-effective to implement.

According to the present invention, a multifunctional hydraulic assembly for a heat pump for room heating and for the production of domestic hot water and a heat pump provided with a hydraulic assembly is provided in accordance with the appended claims.

### BRIEF DESCRIPTION OF THE DRAWINGS

The present invention will now be described with reference to the accompanying drawings, which illustrate non-limiting embodiment examples thereof with the warning that, given the particular complexity of the drawings and the large number of details, not all the elements have been numbered; wherein:
- Figure 1 shows a first variant of a general hydraulic scheme of a heat pump wherein a first variant of a hydraulic assembly is used manufactured in accordance with the present invention;
- Figure 2 shows a side view of the hydraulic assembly of Figure 1;
- Figure 3 shows a plan view of the hydraulic assembly of Figure 2;
- Figure 4 shows a front view of the hydraulic assembly of Figure 2;
- Figure 5 shows a sectional view along the line V-V of the assembly of Figure 4;
- Figure 6 shows a side view of a portion of the heat pump of Figure 1;
- Figure 7 shows a front view of the portion of the heat pump of Figure 6;
- Figure 8 shows a sectional view along the line VIII-VIII of the portion of the heat pump of Figure 6;
- Figure 9 shows a second variant of a general hydraulic scheme of a heat pump wherein the first variant of the hydraulic assembly is used manufactured in accordance with the present invention;
- Figure 10 shows a third variant of a general hydraulic scheme of a heat pump wherein a second variant of the hydraulic assembly is used manufactured in accordance with the present invention;
- Figure 11 shows a partially sectional front view of a portion of the heat pump of Figure 10;
- Figure 12 shows a side view of the portion of the heat pump of Figure 11;
- Figure 13 shows a sectional view along the line XIII-XIII of the portion of the heat pump of Figure 12; and
- Figure 14 shows a fourth variant of a general hydraulic scheme of a heat pump wherein the second variant of the hydraulic assembly is used manufactured in accordance with the present invention.

### PREFERRED EMBODIMENTS OF THE INVENTION

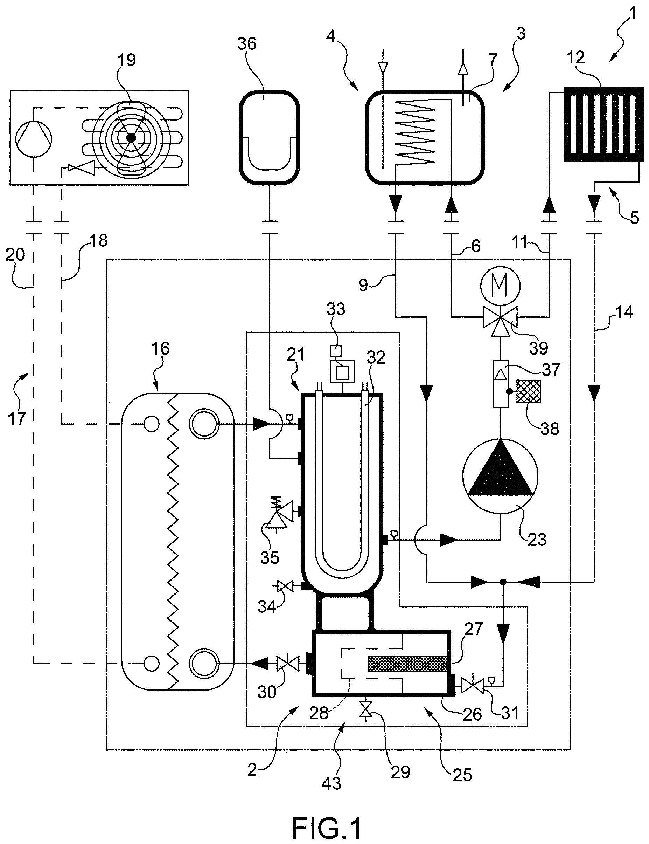

In Figure 1, reference numeral 1 indicates as a whole a heat pump system for room heating and for the production of domestic hot water.

The system 1 comprises a heat pump 2 and a hydraulic network 3 hydraulically connected to one another.

The hydraulic network 3 comprises, in turn, in a known manner, a high-temperature heating circuit 5 and a circuit 4 for the production of domestic hot water. The circuit 4 comprises a hot water delivery duct 6 towards at least one heating element 7 and a cold water return duct 9 from the heating element 7 towards the heat pump 2.

The circuit 5 comprises, in turn, a hot water delivery duct 11 towards at least one radiator 12 and a cold water return duct 14 towards the heat pump 2 from the radiator 12.

Still according to what illustrated in Figure 1, the heat pump 2 comprises:
- a primary heat exchanger 16 advantageously, but not necessarily, of the plate type, to which a refrigerant gas supply circuit 17 is associated, comprising a refrigerant gas delivery duct 18 towards a condenser 19 and a refrigerant gas return duct 20 from the condenser 19 towards the heat exchanger 16;
- an auxiliary heater 21 in hydraulic connection with the plate heat exchanger 16;
- a pumping assembly 23 hydraulically connected to the auxiliary heater 21;
- a filtering element 25, preferably of the magnetic type, having an outer body 26 in hydraulic connection with the heat exchanger 16 which houses a magnetic insert 27, preferably made of neodymium for the magnetic capture of the impurities of ferrous origin released into the water, a filtering mesh 28 which partially envelops the magnetic insert 27; and a tap 29 for discharging the impurities;
- a water flow shut-off valve 30 interposed between the heat exchanger 16 and the filtering element 25;
- a water flow shut-off valve 31 coming from the return duct 9 and from the return duct 14 and arranged immediately upstream of the filtering element 25.

The auxiliary heater 21 is provided with a number of electric resistances 32 for heating the water and is provided with an air relief valve 33, with a tap 34 for discharging the water which, in case of need, sends the water to be discharged through a discharge duct; a safety valve 35 which, in case of need, is designed to send the water to be discharged through a discharge duct; and an expansion tank 36.

Finally, the heat pump 2 comprises a flow meter 37 which detects the flow of water circulating in the system, a pressure switch 38, and a three-way diverter valve 39 designed to activate the domestic step and/or the heating step by diverting the water flow coming from the pumping assembly 23.

Inside the heat exchanger 16 a heat exchange takes place between the water coming from the filtering element 25 and the refrigerant gas supplied by the supply circuit 17.

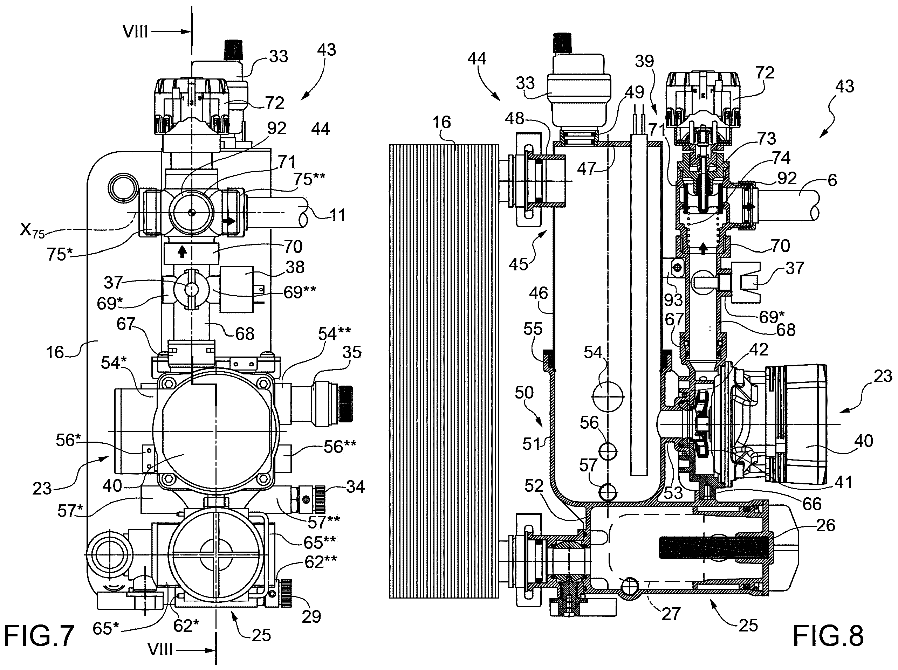

According to a preferred embodiment, the pumping assembly 23 comprises, in turn, an electric motor 40 which sets in rotation an impeller 41 which, in turn, is enclosed in a pump body 42 (or screw) illustrated in Figure 8.

Finally, the heat pump system 1 comprises a hydraulic valve assembly 43 designed to regulate the water flows from/to the heat exchanger 16 and from/to the hydraulic network 3.

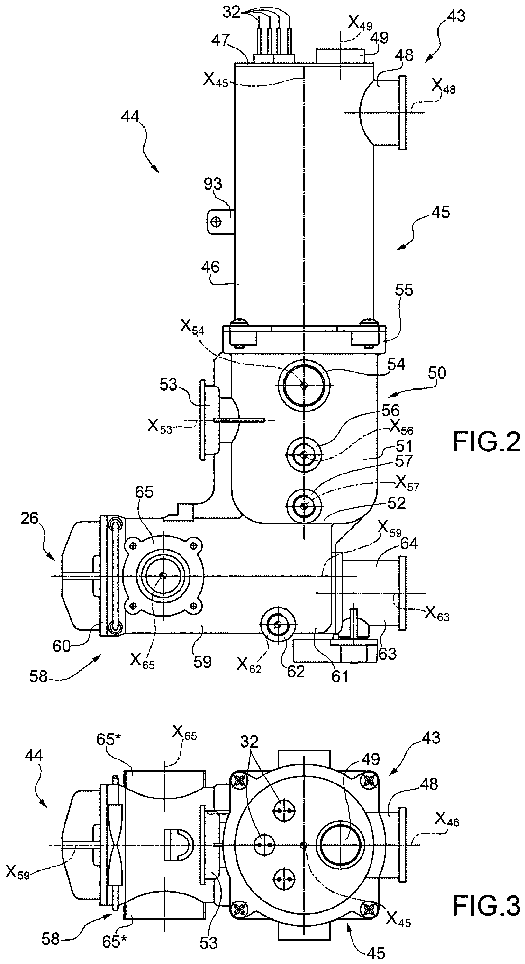

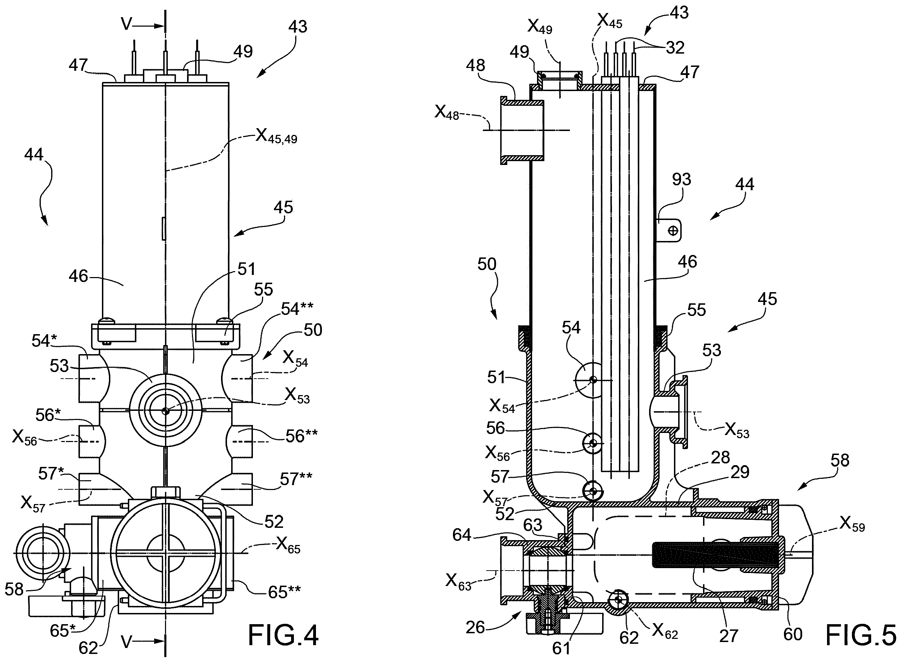

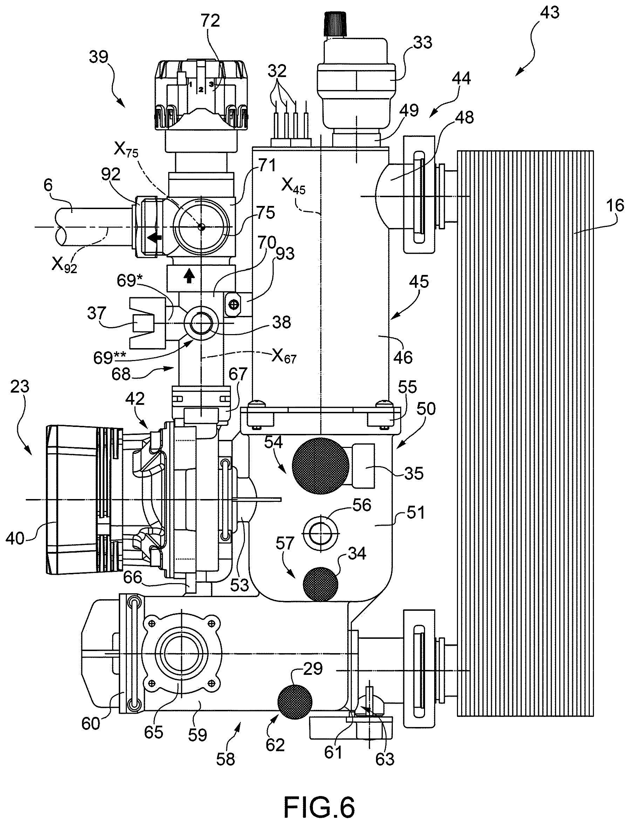

According to what illustrated in Figures 2 to 8, the hydraulic assembly 43 is made by means of a support body 44 comprising a tubular-shaped upper portion 45 which defines, at least partially, a housing of the auxiliary heater 21. In particular, the upper portion 45 is provided with a side wall 46 with cylindrical symmetry around an axis X₄₅ and a head wall 47. The upper portion 45 is provided with a union 48 for the heat exchanger 16 having an axis X₄₈ transverse (preferably orthogonal) to the axis X₄₅ and arranged on the side wall 46, in proximity to the head wall 47. The upper portion 45 is provided with a union 49 for the air relief valve 33 having an axis X₄₉ parallel to (and preferably non-coinciding with) the axis X₄₅ and arranged on the head wall 47.

The support body 44 further comprises a housing made by means of a tubular-shaped lower portion 50 which defines, together with the upper portion 45, the housing of the auxiliary heater 21. In particular, the lower portion 50 is provided with a side wall 51 with cylindrical symmetry around the axis X₄₅ and a bottom wall 52. The lower portion 50 is provided with a union 53 for the pumping assembly 23 having an axis X₅₃ transverse (preferably orthogonal) to the axis X₄₅ and arranged on the side wall 51, in proximity to the bottom wall 52. Furthermore, the lower portion 50 is provided with a pair of unions 54*, 54** diametrically opposite with respect to the axis X₄₅ for the safety valve 35 having a common axis X₅₄ orthogonal to the axis X₄₅ and to the axis X₅₃ and formed on the side wall 51, in proximity to a flange 55 for the connection with the upper portion 45. The lower portion 50 is provided with a pair of unions 56*, 56** diametrically opposite with respect to the axis X₄₅ for the expansion tank 36 having a common axis X₅₆ orthogonal to the axis X₄₅ and parallel to the axis X₅₄ and formed on the side wall 51, below the unions 54. The lower portion 50 is finally provided with a pair of unions 57*, 57** diametrically opposite with respect to the axis X₄₅ for the tap 34, having a common axis X₅₇ orthogonal to the axis X₄₅ and parallel to the axis X₅₄ and arranged on the side wall 51, below the unions 56, in proximity to the bottom wall 52.

The upper and lower portions 45, 50 are connected to one another in a known manner (for example by welding or by attachment means at the flange 55). As evident, the particular embodiment of the auxiliary heater 21, whose main body is made by means of the connection of the upper portion 45 to the lower portion 50, allows adapting to the dimensions of any type of heat exchanger 16 by varying (increasing/reducing) the longitudinal extension of the upper portion 45. Alternatively, according to a variant not shown, the housing of the auxiliary heater 21 is manufactured as one single body having a side wall with cylindrical symmetry around the axis X₄₅, a bottom wall and a head wall.

The support body 44 further comprises a tubular-shaped body 58 which defines the housing of the filtering element 25. In particular, the body 58 is provided with a side wall 59 with cylindrical symmetry around an axis X₅₉, orthogonal to the axis X₄₅ and a pair of end walls 60, 61. The body 58 is provided with a pair of diametrically opposite unions 62*, 62** for the tap 29 having a common axis X₆₂ orthogonal to the axis X₅₉ and arranged on the side wall 59.

Furthermore, the body 58 is provided with a union 63 for the shut-off valve 30 having an axis X₆₃ parallel to (and preferably non-coinciding with) the axis X₅₉ and orthogonal to the axis X₆₂ and arranged on the end wall 61. The union 63 is designed to accommodate a shut-off ball with suitable sealing gaskets. A sleeve 64 is fitted on the union 63 which defines the union for the heat exchanger 16 coaxial to the axis X₆₃ with the interposition of the shut-off valve 30. Finally, the body 58 is provided with a pair of unions 65*, 65** diametrically opposite with respect to the axis X₅₉ for the return ducts 9, 14 with the interposition of the shut-off valve 31 having a common axis X₆₅ orthogonal to the axis X₅₉ and parallel to the axis X₆₂ and formed on the side wall 59. The body 58 is manufactured as one single piece with the lower portion 50.

The pump body 42 is connected to the union 53 and is provided with a lower appendage 66 for resting against the side wall 59. Furthermore, the pump body 42 is provided with an upper union 67, opposite to the appendage 66 and having an axis X₆₇, which is arranged, in use, parallel to the axis X₄₅ and is designed to implement the connection with a manifold 68.

The manifold 68 is made as a tubular body with cylindrical symmetry around the axis X₆₇ and is provided with a pair of unions 69*, 69**, arranged at the same height as the tubular body and having respective axes orthogonal to one another for implementing the connection with the flow meter 37 and the pressure switch 38, respectively.

Furthermore, the manifold 68 defines at one end a union 70 for a support body 71 of the three-way diverter valve 39 designed to divert the water flow and having an electric motor 72, which in turn drives a relative diverter shutter 73 subjected to the action of a helical spring 74. The support body 71 further comprises a pair of unions 75*, 75** diametrically opposite with respect to the axis X₆₇ for the delivery duct 11 having a common axis X₇₅ orthogonal to the axis X₆₇. Finally, the support body 71 comprises a union 92 for the delivery duct 6 having an axis X₉₂ orthogonal both to the axis X₆₇ and to the axis X₇₅.

According to a preferred variant, the hydraulic assembly 43 comprises a connection bracket 93 interposed between the side wall defining the manifold 68 and the side wall 46.

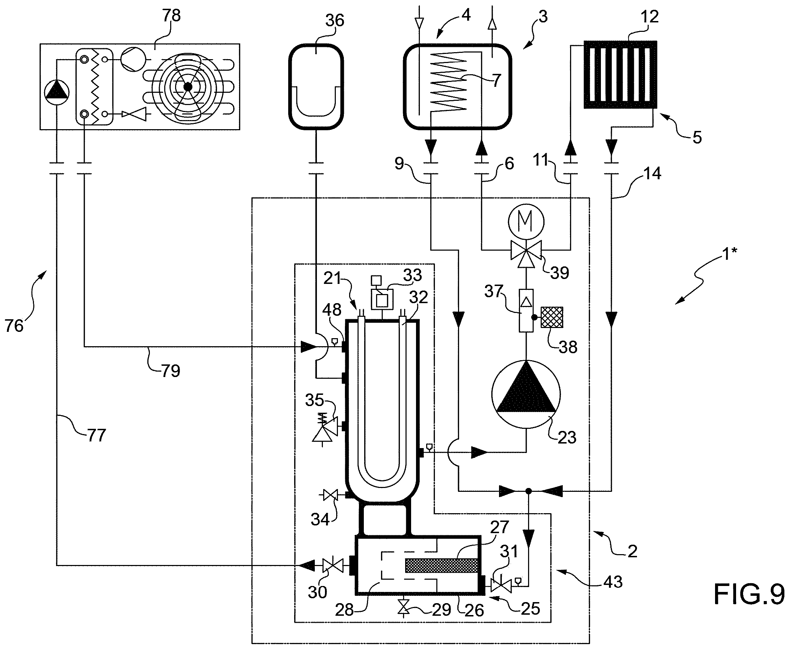

According to the variant illustrated in Figure 9, the heat pump system 1* for room heating and for the production of domestic hot water is of the glycol water/water type; the heat pump system 1* is alternative to the system illustrated in Figure 1 and the corresponding parts are indicated, where possible, with the same reference numerals. The system 1* is not provided with the heat exchanger 16; but it is rather provided with a glycol water supply circuit 76 comprising a glycol water delivery duct 77 towards the auxiliary heater 21 from a storage tank 78 and a glycol water return duct 79 from the filtering element 25 towards a storage tank 80. The union 48 is designed to implement the connection with the delivery duct 79 and the union, on the other hand, is designed to implement the connection with the return duct 77.

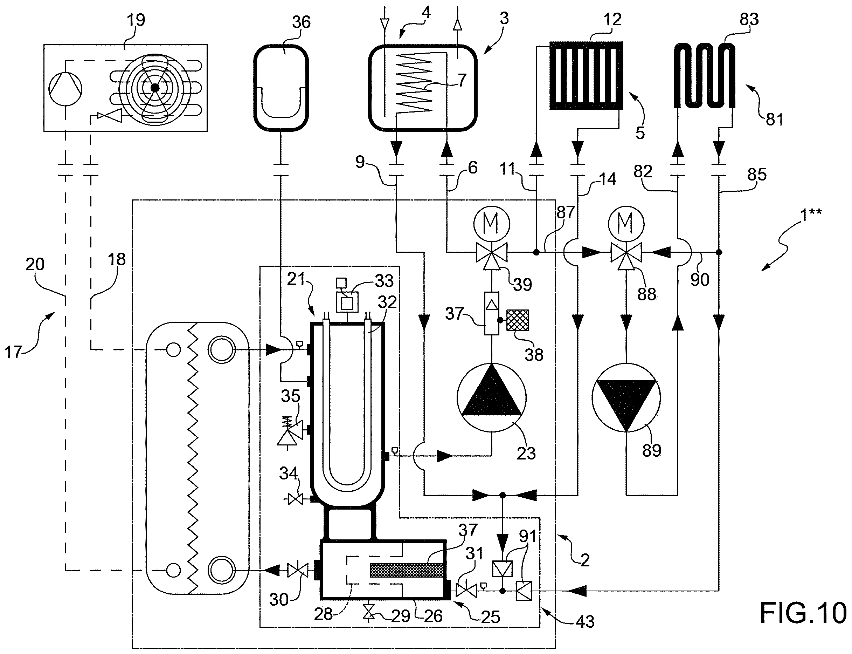

The heat pump system 1** illustrated in Figure 10 is an alternative to the systems 1, 1* illustrated in Figures 1 and 9 and the corresponding parts are indicated, where possible, with the same reference numerals. According to the variant illustrated in Figure 10, the hydraulic network 3 comprises a low-temperature heating circuit 81 comprising a hot water delivery duct 82 towards at least one heating element 83 and a cold water return duct 85 from the heating element 83 towards the heat pump 2. The system 1** comprises a duct which supplies water from the three-way diverter valve 39 to a three-way mixing valve 88 and a pumping assembly 89 hydraulically connected to the three-way mixing valve 88 and to the delivery duct 82. Furthermore, the system 1** comprises a return duct 90 from the low-temperature heating circuit 81 to the three-way mixing valve 88. Finally, the system 1** comprises a pair of unidirectional valves 91, arranged upstream of the shut-off valve 31 along the return duct 85 and along the return ducts 9, 14.

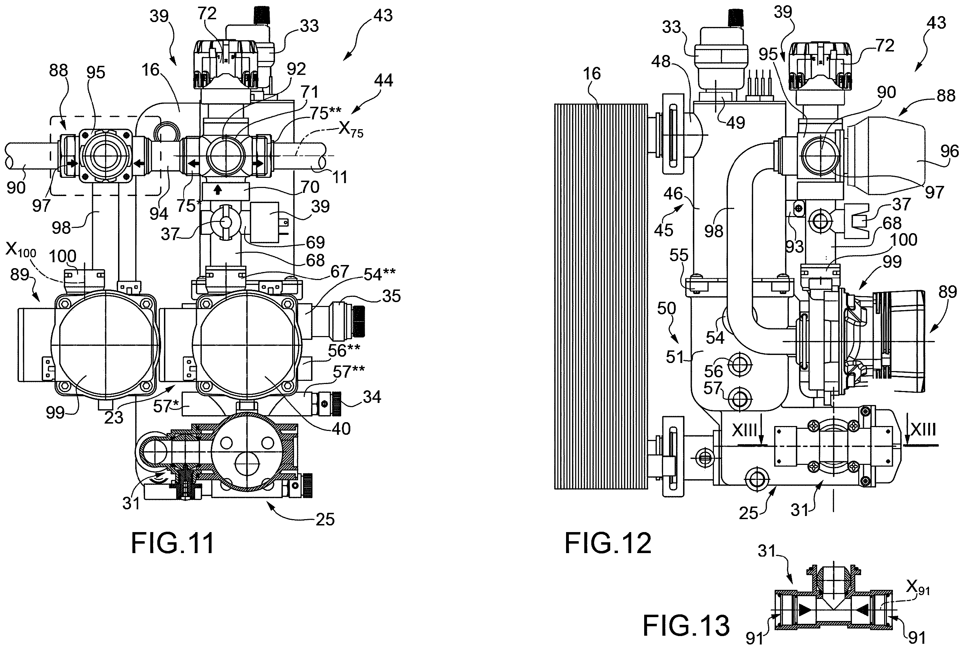

According to what illustrated in Figures 11 to 13, the union 75* is connected to a sleeve 94 coaxial to the axis X₇₅ which defines at one end a union having an axis orthogonal to the axis X₇₅ for a support body 95 of the three-way mixing valve 88 and having an electric motor 96, which in turn drives a relative diverter shutter subjected to the action of a helical spring. The support body 95 is provided with a further union 97 coaxial to the axis X₇₅ for the return duct 90 and a union having an axis orthogonal to the axis X₇₅ for a duct 98 connecting the three-way mixing valve 88 to the pumping assembly 89. The pumping assembly 89 comprises, in turn, an electric motor which sets in rotation an impeller enclosed in a pump body 99 (or screw). The pump body 99 is provided with an upper union 100 having an axis X₁₀₀ which is arranged, in use, parallel to the axis X₆₇ for the delivery duct 82.

Finally, according to what better illustrated in Figure 13, the shut-off valve 31 is made by means of a T-shaped body designed to accommodate a shut-off ball with suitable sealing gaskets and the two unidirectional valves 91 having a common axis X₉₁.

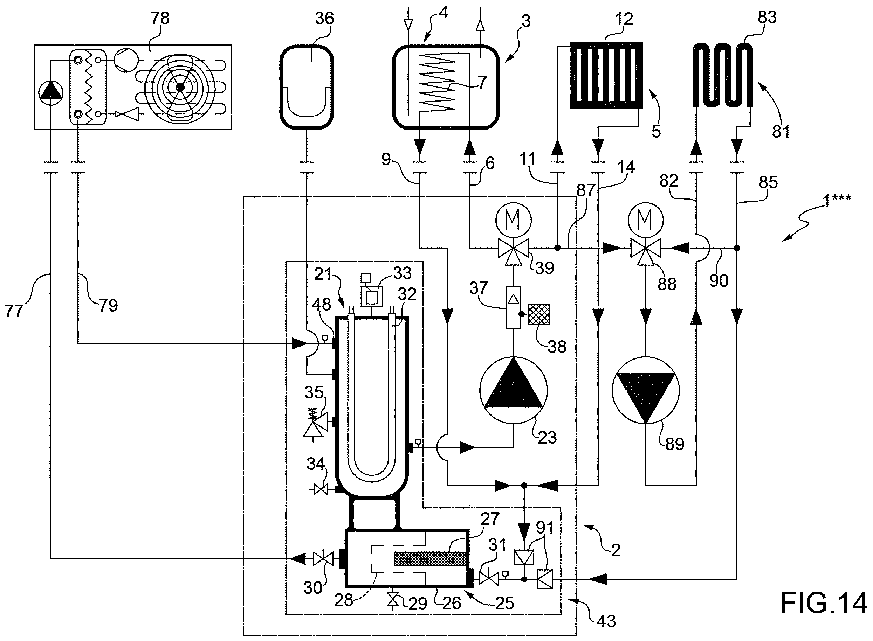

According to the variant illustrated in Figure 14, the heat pump system 1*** for room heating and for the production of domestic hot water is of the glycol water/water type; the heat pump system 1*** is alternative to the systems 1, 1*, 1** illustrated in Figures 1, 9 and 10 and the corresponding parts are indicated, where possible, with the same reference numerals. The system 1*** is not provided with the heat exchanger 16; but it is provided with a glycol water supply circuit 76 comprising a duct 77 for delivering glycol water to the auxiliary heater 21 from a storage tank 78 and a duct 79 for returning glycol water from the filtering element 25 to a storage tank 80. The union 48 is designed to implement the connection with the delivery duct 79 and the union 30, on the other hand, is designed to implement the connection with the return duct 77.

As evident, both the support body 44 and the manifold 38 can be provided with further unions in addition to those listed and possibly closed by means of suitable closing caps.

The hydraulic assembly 43 described thus far is hydraulically connected directly to the heat exchanger 16 through quick couplings.

The main advantage of the hydraulic assembly 43 consists in providing a rational arrangement of the components of the heat pump system 1 and a consequent reduction of the overall dimensions thanks to the reduction of the pipes necessary for the connection of said components. In particular, there is no need for connection ducts of the heat exchanger 16 to the auxiliary heater 21 and of the auxiliary heater 21 to the pumping assembly 23, respectively.

Furthermore, the particular construction of the support body 44 allows a significant reduction in investment costs in moulds and equipment and a consequent reduction in manufacturing costs.

### LIST OF THE REFERENCE NUMERALS OF THE FIGURES

- 1: heat pump system
- 2: heat pump
- 3: hydraulic network
- 4: high-temperature circuit
- 5: domestic water circuit
- 6: delivery duct
- 7: heating element
- 9: return duct
- 11: delivery duct
- 12: radiator
- 14: return duct
- 16: heat exchanger
- 17: refrigerant gas supply circuit
- 18: delivery duct
- 19: condenser
- 20: return duct
- 21: auxiliary heater
- 23: pumping assembly
- 25: filtering element
- 26: outer body
- 27: magnetic insert
- 28: filtering mesh
- 29: tap
- 30: shut-off valve
- 31: shut-off valve
- 32: electric resistances
- 33: relief valve
- 34: tap
- 35: safety valve
- 36: expansion tank
- 37: flow meter
- 38: pressure switch
- 39: three-way diverter valve
- 40: electric motor
- 41: impeller
- 42: pump body
- 43: hydraulic assembly
- 44: support body
- 45: upper portion
- 46: side wall
- 47: head wall
- 48: union
- 49: union
- 50: lower portion
- 51: side wall
- 52: bottom wall
- 53: union
- 54: unions
- 55: flange
- 56: unions
- 57: unions
- 58: body
- 59: side wall
- 60: end wall
- 61: end wall
- 62: unions
- 63: union
- 64: sleeve
- 65: union
- 66: appendage
- 67: union
- 68: manifold
- 69: unions
- 70: union
- 71: support body
- 72: electric motor
- 73: shutter
- 74: spring
- 75: unions
- 76: glycol water supply circuit
- 77: delivery duct
- 78: tank
- 79: return duct
- 80: tank
- 81: low-temperature circuit
- 82: delivery duct
- 83: heating element
- 85: return duct
- 87: duct
- 88: three-way mixing valve
- 89: pumping assembly
- 90: return duct
- 91: unidirectional valves
- 92: union
- 93: connection bracket
- 94: sleeve
- 95: support body
- 96: electric motor
- 97: union
- 98: connection duct
- 99: pump body
- 100: union

## Claims

1. A hydraulic assembly (43) for a heat pump system (1, 1*, 1**, 1***) for room heating and for the production of domestic hot water, in which a heat pump (2) is hydraulically connected to a hydraulic network (3) having a room heating circuit (5) and a domestic hot water heating circuit (4); the heat pump (2) is provided with a heat exchanger (16); with an auxiliary heater (21) in hydraulic connection with the heat exchanger (16) and provided with a number of electric resistances (32) arranged inside a housing; and with a filtering element (25) in hydraulic connection with the heat exchanger (16) for the impurities released into the water having an outer tank (26); wherein the hydraulic assembly (43) is hydraulically connectable to the heat exchanger (16) in a direct manner; and comprises a support body (44) comprising a first portion (45) and a second portion (58); wherein the first portion (45) at least partially defines said housing, has a first axis (X₄₅) and is provided with a first union (48) for the connection to the heat exchanger (16); the second portion (58) comprises a body having a second axis (X₅₈) orthogonal to the first axis (X₄₅), which defines said tank (26) and is provided with a second union (63) for the connection to the heat exchanger (16) ;
the hydraulic assembly (43) is **characterized in that** the support body (44) is further provided with:
- a third union (49) having a third axis (X₄₉) for the connection to an air relief valve (33); and/or
- a pair of fourth unions (54) having a common fourth axis (X₅₄) for a safety valve (35); and/or
- a pair of fifth unions (56) having a common fifth axis (X₅₆) for an expansion tank (36); and/or
- a pair of sixth unions (57) having a common sixth axis (X₅₇) for a tap (34) .

2. An assembly according to claim 1, wherein the support body (44) comprises a third portion (50) coaxial to the first axis (X₄₅) and manufactured as one single piece together with the second portion (58), which defines, together with the first portion (45), to which it is connected, said housing of the auxiliary heater (21).

3. An assembly according to claim 1 or 2, wherein the first and the second union (48, 63) are provided with a seventh axis (X₄₅) and with an eighth axis (X₆₃), respectively, which are parallel to one another and are both transverse, preferably orthogonal, to the first axis (X₄₅).

4. An assembly according to any one of the preceding claims, wherein the heat pump (2) is provided with a first pumping assembly (23) hydraulically connected to the auxiliary heater (21); and wherein the support body (44) is provided with a seventh union (53) having a respective ninth axis (X₅₃), which is transverse, preferably orthogonal, to the first axis (X₄₅).

5. An assembly according to claims 3 and 4, wherein the seventh union (53) is diametrically opposite relative to the first and the second union (48, 63).

6. An assembly according to any one of the preceding claims, wherein said third union (49), fourth unions (54), fifth unions (56) and sixth unions (57) are obtained in the third portion (50) or in the first portion (45).

7. An assembly according to any one of the preceding claims, wherein the third axis (X₄₉) is parallel to and preferably non-coinciding with the first axis (X₄₅) ; and/or wherein the fourth axis (X₅₄), the fifth axis (X₅₆) and the sixth axis (X₅₇) are transverse, preferably orthogonal, to the first axis (X₄₅) .

8. An assembly according to any one of the preceding claims, wherein the second portion (58) is provided with a pair of diametrically opposite eighth unions (62*, 62**) for a tap (29).

9. An assembly according to any one of the preceding claims, wherein the heat pump (2) comprises a first water flow shut-off valve (30) interposed between the heat exchanger (16) and the filtering element (25); and a second flow shut-off valve (31) arranged immediately upstream of the filtering element (25); and wherein the second portion (58) is provided with respective ninth unions (63) for the first shut-off valve (30) and for the second shut-off valve (31) having respective axes which are orthogonal to one another.

10. An assembly according to any one of the preceding claims, wherein the heat pump (2) is provided with a first pumping assembly (23) hydraulically connected to the auxiliary heater (21); and the hydraulic assembly (43) comprises a manifold (68) having a tubular shape and provided with a tenth axis (X₆₇) arranged, in use, parallel to the first axis (X₄₅) and is connectable to a tenth union (67) of a pump body (42) of the first pumping assembly (23).

11. An assembly according to claim 10, wherein the manifold (68) is provided with a pair of eleventh unions (69*, 69**) having respective orthogonal axes so as to establish a connection to a flow meter (37) and to a pressure switch (38), respectively.

12. An assembly according to claim 10 or 11, wherein the manifold (68) is connected to a support body (71) of a three-way diverter valve (39) coaxial to the tenth axis (X₆₇) and having a plurality of twelfth unions (75, 92) for a delivery duct (11) of the secondary circuit (5) and for a delivery duct (6) of the primary circuit (4).

13. An assembly according to any one of the claims from 10 to 12, wherein the hydraulic assembly (43) comprises a connection bracket (93) interposed between the manifold (68) and a side wall (46) of the first portion (45).

14. A heat pump (2), **characterized in that** it is provided with at least one hydraulic assembly (43) according to any one of the claims from 1 to 13.

15. A heat pump according to claim 14 and comprising a flow shut-off valve (31) arranged immediately upstream of the filtering element (25); and a pair of one-way valves (91) arranged upstream of the shut-off valve (31); wherein said shut-off valve (31) is obtained by means of a T-shaped body designed to accommodate a shut-off ball and the two one-way valves (91) having a common axis (X₉₁).

16. A heat pump according to claim 14 or 15, wherein the first pumping assembly (23) has a pump body (42) provided with a lower appendage (66) against which a side wall (59) of the second portion (58) rests.

17. A heat pump according to any one of the claims from 14 to 16, wherein the hydraulic network (3) comprises a low-temperature heating circuit (81) and the heat pump (2) is provided with a three-way mixing valve (88) and with a second pumping assembly (89) hydraulically connected to the three-way mixing valve (88); wherein the three-way mixing valve (88) has a support body (95) provided with respective unions for a return duct (90) and for a connection duct (98) for the connection to the second pumping assembly (89) and to the three-way diverter valve (39).

18. A heat pump according to claim 17, wherein the second pumping assembly (89) is provided with a pump body (99) provided with an upper union (100) for a delivery duct (82) of the low-temperature heating circuit (81).

## Patentansprüche

1. Hydraulische Baugruppe (43) für ein Wärmepumpensystem (1, 1*, 1**, 1***) zur Raumheizung und zur Erzeugung von Brauchwarmwasser, bei der eine Wärmepumpe (2) hydraulisch mit einem hydraulischen Netz (3) verbunden ist, das einen Raumheizkreis (5) und einen Brauchwarmwasserheizkreis (4) aufweist; die Wärmepumpe (2) ist mit einem Wärmetauscher (16) versehen; mit einem Zuheizer (21), der in hydraulischer Verbindung mit dem Wärmetauscher (16) steht und mit einer Anzahl elektrischer Widerstände (32) versehen ist, die innerhalb eines Gehäuses angeordnet sind; und mit einem Filterelement (25), das in hydraulischer Verbindung mit dem Wärmetauscher (16) für die in das Wasser abgegebenen Verunreinigungen steht und einen Außentank (26) aufweist; wobei die hydraulische Baugruppe (43) hydraulisch direkt mit dem Wärmetauscher (16) verbindbar ist; und einen Stützkörper (44) umfasst, der einen ersten Abschnitt (45) und einen zweiten Abschnitt (58) umfasst; wobei der erste Abschnitt (45) das Gehäuse zumindest teilweise definiert, eine erste Achse (X₄₅) aufweist und mit einem ersten Anschlussstück (48) für die Verbindung mit dem Wärmetauscher (16) versehen ist; der zweite Abschnitt (58) einen Körper mit einer zweiten Achse (X₅₈) orthogonal zur ersten Achse (X₄₅) umfasst, der den Tank (26) definiert und mit einem zweiten Anschlussstück (63) für die Verbindung mit dem Wärmetauscher (16) versehen ist; die hydraulische Baugruppe (43) ist **dadurch gekennzeichnet, dass** der Stützkörper (44) ferner mit folgenden Merkmalen versehen ist:
- ein drittes Anschlussstück (49) mit einer dritten Achse (X₄₉) für den Anschlussstück an ein Entlüftungsventil (33); und/oder
- ein Paar vierter Anschlusstücke (54) mit einer gemeinsamen vierten Achse (X₅₄) für ein Sicherheitsventil (35); und/oder
- ein Paar fünfter Anschlussstücke (56) mit einer gemeinsamen fünften Achse (X₅₆) für einen Ausdehnungstank (36); und/oder
- ein Paar sechster Anschlüsse (57) mit einer gemeinsamen sechsten Achse (X₅₇) für einen Wasserhahn (34).

2. Baugruppe nach Anspruch 1, bei der der Stützkörper (44) einen dritten Abschnitt (50) umfasst, der koaxial zur ersten Achse (X₄₅) verläuft und zusammen mit dem zweiten Abschnitt (58), der zusammen mit dem ersten Abschnitt (45), mit dem er verbunden ist, das Gehäuse des Zuheizers (21) bildet, aus einem einzigen Stück gefertigt ist.

3. Baugruppe nach Anspruch 1 oder 2, bei der das erste und das zweite Anschlussstück (48, 63) mit einer siebten Achse (X₄₅) bzw. einer achten Achse (X₆₃) versehen sind, die parallel zueinander und beide quer, vorzugsweise orthogonal, zur ersten Achse (X₄₅) verlaufen.

4. Baugruppe nach einem der vorhergehenden Ansprüche, wobei die Wärmepumpe (2) mit einer ersten Pumpenbaugruppe (23) versehen ist, die hydraulisch mit dem Zuheizer (21) verbunden ist; und wobei der Stützkörper (44) mit einem siebten Anschlussstück (53) versehen ist, der eine entsprechende neunte Achse (X₅₃) aufweist, die quer, vorzugsweise orthogonal, zur ersten Achse (X₄₅) verläuft.

5. Baugruppe nach Anspruch 3 und 4, wobei das siebte Anschlussstück (53) dem ersten und dem zweiten Anschlussstück (48, 63) diametral gegenüberliegt.

6. Baugruppe nach einem der vorhergehenden Ansprüche, bei der das dritte Anschlussstück (49), das vierte Anschlussstück (54), das fünfte Anschlussstück (56) und das sechste Anschlussstück (57) in dem dritten Teil (50) oder in dem ersten Teil (45) ausgebildet sind.

7. Baugruppe nach einem der vorhergehenden Ansprüche, wobei die dritte Achse (X₄₉) parallel zur ersten Achse (X₄₅) verläuft und vorzugsweise nicht mit ihr zusammenfällt; und/oder wobei die vierte Achse (X₅₄), die fünfte Achse (X₅₆) und die sechste Achse (X₅₇) quer, vorzugsweise orthogonal, zur ersten Achse (X₄₅) verlaufen.

8. Baugruppe nach einem der vorhergehenden Ansprüche, wobei der zweite Abschnitt (58) mit einem Paar diametral gegenüberliegendes achtes Anschlussstück (62*, 62**) für einen Wasserhahn (29) versehen ist.

9. Anordnung nach einem der vorhergehenden Ansprüche, wobei die Wärmepumpe (2) ein erstes Wasserstrom-Absperrventil (30), das zwischen dem Wärmetauscher (16) und dem Filterelement (25) angeordnet ist, und ein zweites Strom-Absperrventil (31) aufweist, das unmittelbar stromaufwärts des Filterelements (25) angeordnet ist, und wobei der zweite Abschnitt (58) mit jeweiligen neunten Anschlussstücken (63) für das erste Absperrventil (30) und für das zweite Absperrventil (31) versehen ist, die jeweilige Achsen aufweisen, die orthogonal zueinander sind.

10. Baugruppe nach einem der vorhergehenden Ansprüche, wobei die Wärmepumpe (2) mit einer ersten Pumpenbaugruppe (23) versehen ist, die hydraulisch mit dem Zuheizer (21) verbunden ist; und die hydraulische Baugruppe (43) einen rohrförmigen Verteiler (68) umfasst, der mit einer zehnten Achse (X₆₇) versehen ist, die im Betrieb parallel zur ersten Achse (X₄₅) angeordnet ist und mit einem zehnten Anschlussstück (67) eines Pumpenkörpers (42) der ersten Pumpenbaugruppe (23) verbunden werden kann.

11. Baugruppe nach Anspruch 10, wobei der Verteiler (68) mit einem Paar elfter Anschlussstücke (69*, 69**) versehen ist, die jeweils orthogonale Achsen aufweisen, um eine Verbindung mit einem Durchflussmesser (37) bzw. einem Druckschalter (38) herzustellen.

12. Baugruppe nach Anspruch 10 oder 11, bei der der Verteiler (68) mit einem zur zehnten Achse (X₆₇) koaxialen Trägerkörper (71) eines Dreiwege-Umschaltventils (39) verbunden ist, das mehrere zwölfte Anschlussstücke (75, 92) für eine Zufuhrleitung (11) des Sekundärkreises (5) und für eine Zufuhrleitung (6) des Primärkreises (4) aufweist.

13. Baugruppe nach einem der Ansprüche 10 bis 12, wobei die hydraulische Baugruppe (43) einen Verbindungsbügel (93) aufweist, der zwischen dem Verteiler (68) und einer Seitenwand (46) des ersten Teils (45) angeordnet ist.

14. Wärmepumpe (2), **dadurch gekennzeichnet, dass** sie mit mindestens einer hydraulischen Baugruppe (43) nach einem der Ansprüche 1 bis 13 versehen ist.

15. Wärmepumpe nach Anspruch 14, mit einem unmittelbar stromaufwärts des Filterelements (25) angeordneten Strom-Absperrventil (31) und einem Paar stromaufwärts des Absperrventils (31) angeordneter Einwegventile (91), wobei das Absperrventil (31) mittels eines T-förmigen Körpers erhalten wird, der zur Aufnahme einer Absperrkugel ausgelegt ist, und die beiden Einwegventile (91) eine gemeinsame Achse (X₉₁) haben.

16. Wärmepumpe nach Anspruch 14 oder 15, wobei die erste Pumpeneinheit (23) einen Pumpenkörper (42) aufweist, der mit einem unteren Ansatz (66) versehen ist, an dem eine Seitenwand (59) des zweiten Teils (58) anliegt.

17. Wärmepumpe nach einem der Ansprüche 14 bis 16, wobei das hydraulische Netz (3) einen Niedertemperatur-Heizkreislauf (81) umfasst und die Wärmepumpe (2) mit einem Dreiwege-Mischventil (88) und mit einer zweiten Pumpenbaugruppe (89) versehen ist, die mit dem Dreiwege-Mischventil (88) hydraulisch verbunden ist; wobei das Dreiwege-Mischventil (88) einen Tragkörper (95) aufweist, der mit entsprechenden Anschlüssen für eine Rücklaufleitung (90) und für eine Verbindungsleitung (98) zur Verbindung mit der zweiten Pumpenbaugruppe (89) und mit dem Dreiwege-Umschaltventil (39) versehen ist.

18. Wärmepumpe nach Anspruch 17, wobei die zweite Pumpenbaugruppe (89) mit einem Pumpenkörper (99) versehen ist, der ein oberes Anschlussstück (100) für eine Druckleitung (82) des Niedertemperatur-Heizkreises (81) aufweist.

## Revendications

1. Ensemble hydraulique (43) pour un système de pompe à chaleur (1, 1*, 1**, 1***) pour le chauffage de locaux et pour la production d'eau chaude sanitaire, dans lequel une pompe à chaleur (2) est connectée hydrauliquement à un réseau hydraulique (3) ayant un circuit de chauffage de locaux (5) et un circuit de chauffage d'eau chaude sanitaire (4) ; la pompe à chaleur (2) est pourvue d'un échangeur de chaleur (16), d'un élément de chauffage auxiliaire (21) en connexion hydraulique avec l'échangeur de chaleur (16) et pourvu d'un certain nombre de résistances électriques (32) agencées à l'intérieur d'un boîtier, et d'un élément filtrant (25) en connexion hydraulique avec l'échangeur de chaleur (16) pour les impuretés libérées dans l'eau et ayant un réservoir (26) extérieur ; dans lequel l'ensemble hydraulique (43) peut être connecté hydrauliquement à l'échangeur de chaleur (16) de manière directe, et comprend un corps de support (44) comprenant une première partie (45) et une deuxième partie (58) ; dans lequel la première partie (45) définit au moins partiellement ledit boîtier, a un premier axe (X₄₅) et est pourvue d'un premier raccord (48) pour la connexion à l'échangeur de chaleur (16) ; la deuxième partie (58) comprend un corps ayant un deuxième axe (X₅₈) orthogonal au premier axe (X₄₅), qui définit ledit réservoir (26), et est pourvue d'un deuxième raccord (63) pour la connexion à l'échangeur de chaleur (16) ;
l'ensemble hydraulique (43) est **caractérisé en ce que** le corps de support (44) est en outre pourvu :
- d'un troisième raccord (49) ayant un troisième axe (X₄₉) pour la connexion à une soupape de décharge d'air (33) ; et/ou
- d'une paire de quatrièmes raccords (54) ayant un quatrième axe (X₅₄) commun pour une soupape de sécurité (35) ; et/ou
- une paire de cinquièmes raccords (56) ayant un cinquième axe (X₅₆) commun pour un réservoir d'expansion (36) ; et/ou
- une paire de sixièmes raccords (57) ayant un sixième axe (X₅₇) commun pour un robinet (34).

2. Ensemble selon la revendication 1, dans lequel le corps de support (44) comprend une troisième partie (50) coaxiale au premier axe (X₄₅) et fabriquée en un seul tenant avec la deuxième partie (58), qui définit avec la première partie (45) à laquelle elle est connectée ledit boîtier de l'élément de chauffage auxiliaire (21).

3. Ensemble selon la revendication 1 ou 2, dans lequel les premier et deuxième raccords (48, 63) sont pourvus d'un septième axe (X₄₅) et d'un huitième axe (X₆₃), respectivement, qui sont parallèles l'un à l'autre et qui sont tous deux transversaux, de préférence orthogonaux au premier axe (X₄₅).

4. Ensemble selon l'une des revendications précédentes, dans lequel la pompe à chaleur (2) est pourvue d'un premier ensemble de pompage (23) connecté hydrauliquement à l'élément de chauffage auxiliaire (21) ; et dans lequel le corps de support (44) est pourvu d'un septième raccord (53) ayant un neuvième axe (X₅₃) respectif, qui est transversal, de préférence orthogonal, au premier axe (X₄₅).

5. Ensemble selon les revendications 3 et 4, dans lequel le septième raccord (53) est diamétralement opposé par rapport aux premier et deuxième raccords (48, 63).

6. Ensemble selon l'une des revendications précédentes, dans lequel lesdits troisième raccord (49), quatrièmes raccords (54), cinquièmes raccords (56) et sixièmes raccords (57) sont obtenus dans la troisième partie (50) ou dans la première partie (45).

7. Ensemble selon l'une des revendications précédentes, dans lequel le troisième axe (X₄₉) est parallèle au premier axe (X₄₅) et de préférence ne coïncide pas avec celui-ci ; et/ou dans lequel le quatrième axe (X₅₄), le cinquième axe (X₅₆) et le sixième axe (X₅₇) sont transversaux, de préférence orthogonaux, au premier axe (X₄₅).

8. Ensemble selon l'une des revendications précédentes, dans lequel la deuxième partie (58) est pourvue d'une paire de huitièmes raccords (62*, 62**) diamétralement opposés pour un robinet (29).

9. Ensemble selon l'une des revendications précédentes, dans lequel la pompe à chaleur (2) comprend une première soupape d'arrêt (30) de débit d'eau interposée entre l'échangeur de chaleur (16) et l'élément filtrant (25) ; et une deuxième soupape d'arrêt (31) de débit agencée immédiatement en amont de l'élément filtrant (25) ; et dans lequel la deuxième partie (58) est pourvue de neuvièmes raccords (63) respectifs pour la première soupape d'arrêt (30) et pour la deuxième soupape d'arrêt (31) ayant des axes respectifs qui sont orthogonaux l'un par rapport à l'autre.

10. Ensemble selon l'une des revendications précédentes, dans lequel la pompe à chaleur (2) est pourvue d'un premier ensemble de pompage (23) connecté hydrauliquement à l'élément de chauffage auxiliaire (21) ; et l'ensemble hydraulique (43) comprend un collecteur (68) ayant une forme tubulaire et pourvu d'un dixième axe (X₆₇) agencé, en cours d'utilisation, parallèlement au premier axe (X₄₅), et peut être connecté à un dixième raccord (67) d'un corps de pompe (42) du premier ensemble de pompage (23).

11. Ensemble selon la revendication 10, dans lequel le collecteur (68) est pourvu d'une paire de onzièmes raccords (69*, 69**) ayant des axes orthogonaux respectifs de sorte à établir une connexion à un débitmètre (37) et à un commutateur de pression (38), respectivement.

12. Ensemble selon la revendication 10 ou 11, dans lequel
le collecteur (68) est connecté à un corps de support (71) d'une soupape de dérivation à trois voies (39) coaxiale au dixième axe (X₆₇) et ayant une pluralité de deux douzièmes raccords (75, 92) pour un conduit de distribution (11) du circuit secondaire (5) et pour un conduit de distribution (6) du circuit primaire (4).

13. Ensemble selon l'une des revendications de 10 à 12, dans lequel l'ensemble hydraulique (43) comprend un support de connexion (93) interposé entre le collecteur (68) et une paroi latérale (46) de la première partie (45).

14. Pompe à chaleur (2), **caractérisée en ce qu'**elle est pourvue d'au moins un ensemble hydraulique (43) selon l'une des revendications de 1 à 13.

15. Pompe à chaleur selon la revendication 14, comprenant une soupape d'arrêt (31) de débit agencée immédiatement en amont de l'élément filtrant (25) ; et une paire de soupapes unidirectionnelles (91) agencées en amont de la soupape d'arrêt (31) ; dans laquelle ladite soupape d'arrêt (31) est obtenue au moyen d'un corps en forme de T conçu pour recevoir une bille d'arrêt, et les deux soupapes unidirectionnelles (91) ayant un axe (X₉₁) commun.

16. Pompe à chaleur selon la revendication 14 ou 15, dans laquelle
le premier ensemble de pompage (23) a un corps de pompe (42) pourvu d'un appendice inférieur (66) contre lequel repose une paroi (59) latérale de la deuxième partie (58).

17. Pompe à chaleur selon l'une des revendications de 14 à 16, dans laquelle le réseau hydraulique (3) comprend un circuit de chauffage à basse température (81) et la pompe à chaleur (2) est pourvue d'un mitigeur à trois voies (88) et d'un deuxième ensemble de pompage (89) connecté hydrauliquement au mitigeur à trois voies (88) ; dans laquelle le mitigeur à trois voies (88) a un corps de support (95) pourvu de raccords respectifs pour un conduit de retour (90) et pour un conduit de connexion (98) pour la connexion au deuxième ensemble de pompage (89) et à la soupape de dérivation à trois voies (39).

18. Pompe à chaleur selon la revendication 17, dans laquelle le deuxième ensemble de pompage (89) est pourvu d'un corps de pompe (99) pourvu d'un raccord supérieur (100) pour un conduit de distribution (82) du circuit de chauffage à basse température (81).
